(19)

**Europäisches Patentamt**
**European Patent Office**
**Office européen des brevets**

(11) **EP 4 305 698 B1**

(12) **EUROPEAN PATENT SPECIFICATION**

(45) Date of publication and mention
of the grant of the patent:
**18.12.2024  Bulletin 2024/51**

(21) Application number: **22710632.5**

(22) Date of filing: **10.03.2022**

(51) International Patent Classification (IPC):
*H01M 10/00* *(2006.01)*

(52) Cooperative Patent Classification (CPC):
**H01M 10/00**

(86) International application number:
**PCT/EP2022/056185**

(87) International publication number:
**WO 2022/189566 (15.09.2022 Gazette 2022/37)**

(54) **POLYSACCHARIDE ELECTROLYTES**

POLYSACCHARIDELEKTROLYTE

ÉLECTROLYTES DE POLYSACCHARIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **11.03.2021  EP 21382198**

(43) Date of publication of application:
**17.01.2024  Bulletin 2024/03**

(73) Proprietor: **Fundación Centro de Investigación
Cooperativa de
Energías Alternativas, CIC Energigune
Fundazioa
01510 Vitoria-Gasteiz, Álava (ES)**

(72) Inventors:
• **MORANT MIÑANA, María Carmen
01510 Vitoria-Gasteiz, Álava (ES)**
• **GARCÍA GAITÁN, Estibaliz
01510 Vitoria-Gasteiz, Álava (ES)**
• **ORTIZ VITORIANO, Nagore
01510 Vitoria-Gasteiz, Álava (ES)**

(74) Representative: **ABG Intellectual Property Law,
S.L.
Avenida de Burgos, 16D
Edificio Euromor
28036 Madrid (ES)**

(56) References cited:
**CN-A- 105 130 302        CN-A- 111 224 153
US-A1- 2014 205 909**

• **DI PALMA T M ET AL: "Xanthan and
[kappa]-carrageenan based alkaline hydrogels as
electrolytes for Al/air batteries",
CARBOHYDRATE POLYMERS, APPLIED
SCIENCE PUBLISHERS , LTD BARKING, GB, vol.
157, 26 September 2016 (2016-09-26), pages 122
- 127, XP029848594, ISSN: 0144-8617, DOI:
10.1016/J.CARBPOL.2016.09.076**

EP 4 305 698 B1

## Description

## FIELD OF THE INVENTION

This invention relates to the field of electrochemistry. More particularly, the invention relates to gel electrolytes suitable for use in electrochemical storage systems.

## BACKGROUND

The high specific energy of the Zn-air battery $(1,218 \, Wh \cdot kg^{-1})$ and its inherent safety and low cost make it one of the most promising next-generation batteries. In the operation of these batteries, the performance of the battery is directly impacted by the ionic conductivity of the electrolyte and its interfacial properties with respect to the anode and the cathode. Furthermore, it further affects the capacity, cycling stability, and charging and discharging efficiency of the cell. However, in the development of these batteries towards high efficiency and durability solutions, research on electrolytes has been somewhat overlooked.

More specifically, different issues limit the industrial applicability of zinc batteries. For instance, zinc dendrite formation at the anode upon repeated cycling seriously depresses cycling life, security, coulombic efficiency, and charging capacity of the electrochemical cell. In terms of the electrolyte, alkaline electrolytes such as hydroxides, and more particularly potassium hydroxide, are the typically employed in zinc-based batteries. However, these electrolytes are subject to carbonate formation due to reaction of the hydroxide in the electrolyte with atmospheric $CO_2$. The loss of hydroxide decreases electrolyte availability and ultimately cell capacity. Additionally, since the carbonates are less soluble than the hydroxide, they precipitate and clog the pores of the air electrode, negatively affecting its permeability to oxygen and thus cell performance. Also, due to the basicity of the KOH electrolyte in aqueous solutions, zinc corrodes producing hydrogen during the anodic discharge of the battery, giving rise to charge losses and potentially dangerous hydrogen gas buildup.

Promising results have been achieved with ionic liquid electrolytes and hybrid electrolytes but their high cost, low conductivity and high viscosity limits their practical use in Zn-air batteries. Solid electrolytes present the advantage that they can replace both the liquid electrolyte and the separator because they are mechanically strong and ionically conductive materials. The use of solid electrolytes minimizes the flooding of the electrodes and corrosion problems in the anode but they present relatively low ionic conductivities. On the contrary, gel electrolytes with high ionic conductivity often have weak mechanical strength.

Therefore, it is of utmost importance to develop new electrolyte materials in which changes in mechanical strength and ionic conductivity do not move in opposite directions, and wherein the above-described issues limiting the industrial applicability of Zn-air batteries are minimized.

## BRIEF DESCRIPTION OF THE INVENTION

The present inventors have now unveiled a type of gel electrolyte possessing excellent mechanical properties and conductivity which are capable of avoiding penetrations and leakages of the electrolyte through the capillaries in the porous air cathode, as well as suppressing dendrite formation, hydrogen evolution, shape change, and surface passivation; ultimately enabling levels of zinc utilization approaching 100%.

Thus, in a first aspect, the invention relates to a method for preparing a gel, the method comprising the steps of:

    a) Mixing:

- at least one red seaweed polysaccharide; and
- a solution comprising a metal hydroxide, wherein the concentration of hydroxide in said solution is at least 1.21 mol/L, and wherein the concentration of metal in said solution is at least 2.79 mol/L;

    to obtain an initial mixture;
    b) Heating the initial mixture obtained in step a) to a melting temperature of the red seaweed polysaccharide, to obtain a melt mixture;
    c) Gelating the melt mixture obtained in step b).

In a second aspect, the invention provides a gel comprising a red seaweed polysaccharide network comprising interstices, wherein said interstices comprise a solution comprising a metal hydroxide, wherein the concentration of hydroxide in said solution is at least 1.21 mol/L, and wherein the concentration of metal in said solution is at least 2.79 mol/L.

A very preferred embodiment of the second aspect of the invention relates to said gel, obtainable by the method of the first aspect of the invention.

In a third aspect, the invention pertains to the use of the gel of the second aspect of the invention as an electrolyte, in particular in an electrochemical cell. A related aspect is directed to an electrochemical cell comprising the gel of the second aspect of the invention. In a particularly preferred embodiment, the electrochemical cell is a zinc-air electrochemical cell. The inventors have found that such gel electrolytes do not form granules during the gelation process, providing smooth interfaces between the gel electrolyte and both cathode and anode of the electrochemical cell.

## BRIEF DESCRIPTION OF THE DRAWINGS

Figure 1 illustrates different stages in the assembly of an electrochemical cell according to the present invention: (a) Zn foil laid on the bottom of the cell (anode); (b) gel electrolyte punched ready to use; (c) electrolyte laid on the top of the anode; (d) MnOz cathode laid on the top of the electrolyte (cathode); (e) Zn-air full cell.

Figure 2 shows ionic conductivities for a reference liquid electrolyte and for agarose gel electrolytes of different agarose amounts according to the present invention, at different KOH concentrations.

Figure 3 compares conductivities of agarose, agar and carrageenan gel electrolytes according to the present invention, as measured by EIS, at a polysaccharide amount of 2% wt. and KOH concentration of 8M.

Figure 4 depicts the level of zinc utilization when employing a 2% wt. agarose gel electrolyte according to the present invention in a zinc-air electrochemical cell. Squares identify a 6M KOH electrolyte, whereas circles identify an 8M KOH electrolyte.

Figure 5 reflects a comparison in zinc utilization between zinc-air electrochemical cells wherein an agar electrolyte is synthesized according to the present invention (filled square) or to a comparative method (empty square). The value for an agarose electrolyte according to the present invention is also included as reference.

Figures 6 and 7 reflect a comparison in zinc utilization and capacity between zinc-air electrochemical cells wherein an agarose electrolyte is synthesized according to the present invention or to a comparative prior art method.

## DETAILED DESCRIPTION OF THE INVENTION

The invention relates to a method for preparing a gel. The term gel herein refers to a non-fluid polymer network that is expanded throughout its volume by a fluid (IUPAC definition). The polymer network may be a covalent polymer network; or a physical polymer network, i.e. a network formed through the physical aggregation of polymer chains resulting in regions of local order acting as network junction points, such as by hydrogen bonding, e.g. to form helixes. Preferably, the polymer network is a physical network. More preferably, the polymer network is a physical network wherein polymer strands form helixes with each other, such as by H-bonding, and wherein either a) each of said polymer strands joins in helixes with two or more other polymer strands (aka helical branching), and/or b) said helixes aggregate with each other by physical interaction (aka superhelical aggregation), such as described in Viebke et al., Macromolecules, 1994, 27, 4160-4166.

More specifically, the polymer comprised in the gel of the invention is a polysaccharide, and even more specifically, it is a red seaweed polysaccharide.

Step a) of the method of the present invention comprises mixing at least one red seaweed polysaccharide with a metal hydroxide solution.

As used herein, the term "red seaweed polysaccharide" refers to a polymer comprising, as repeating units, repeating units that are found in any of the polysaccharides, preferably in any of the galactans, obtainable from marine plant species belonging to the class of *Rhodophyceae.*

For the purposes of this invention, a repeating unit refers to a monosaccharide unit that represents at least 5%, preferably at least 15%, in particular at least 30% by weight with respect to the total weight of the polysaccharide. Preferably, the amount of a specific monosaccharide in the polysaccharide is measured by any of the two methods described in Quemener et al., Journal of Applied Phycology, 1998, 10:75-81, such as by the reductive hydrolysis method described therein.

In a preferred embodiment, the red seaweed polysaccharide is a polysaccharide obtainable from marine plant species belonging to the class of *Rhodophyceae.* These polysaccharides can be extracted from the seaweed by methods well known in the art. Such methods are described in detail in the Food And Agriculture Organization Of The United Nations Fisheries technical paper 288 "Production and utilization of products from commercial seaweeds", 1987, which is herein incorporated by reference.

In a preferred embodiment, the red seaweed polysaccharide is a galactan, i.e. a polysaccharide comprising or consisting of repeating galactose units, preferably at least two different repeating galactose units, in particular two different repeating galactose units, which are preferably alternating. For the purposes of this invention, anhydrogalactose, such as 3,6-anhydro galactose, is considered a galactose unit.

In an embodiment, the polysaccharide comprises the alternating repeating units in an amount of at least 50%, preferably at least 70%, more preferably at least 90% by weight with respect to the total weight of the polysaccharide.

In an embodiment, the sulfate content of the polysaccharide is at most 50%, such as between 0.1 and 50%. Preferably, the sulfate content of the polysaccharide is less than 15%, such as less than 3%, such as less than 0.5%, or at most 0.35%, or between 0.1 and any of these top values. In the context of the present invention, sulfate content is determined according to the turbidimetric method described in Dodgson et al., Biochem. J, 1962, 84(1):106-110.

In an embodiment, the weight-average molecular weight of the polysaccharide is between 17 000 and 600 000 g/mol, preferably between 80 000 and 145 000 g/mol. Preferably, weight-average molecular weight is determined by the size exclusion chromatography with multiangle laser light scattering (HPSEC-MALLS) procedure described in Normand et al., Biomacromolecules, 2000, 1(4):730-738.

In an embodiment, the polydispersity of the polysaccharide is between 1.3 and 5.1, preferably between 1.3 and 3.3. Preferably, polydispersity is determined by the size exclusion chromatography with multiangle laser light scattering (HPSEC-MALLS) procedure described in Normand et al., Biomacromolecules, 2000, 1(4):730-738.

In an embodiment, the gel strength of the polysaccharide is between 75 and 3200 g/cm$^2$, preferably between 300 and 2000 g/cm$^2$, more preferably between 750 and 1500 g/cm$^2$. In an embodiment, the lower limit in any of these embodiments is 1000 g/cm$^2$. In a preferred particular embodiment, the gel strength of the polysaccharide is 1000 g/cm$^2$. Preferably, the gel strength is determined according to the Nikan-Sui method, as reported in Freile-Pelegrin et al., Ciencias Marinas, 2002, 28(3):289-296.

In an embodiment, the gelling temperature of the polysaccharide is below its melting point. The difference between the gelling temperature and the melting point may be of at least 1 °C, such as at least 10 °C, such as up to 60 °C. Preferably, the gelling temperature and the melting point are determined as described in Freile-Pelegrin et al., Ciencias Marinas, 2002, 28(3):289-296.

In an embodiment, each of the above sulfate content, weight-average molecular weight, polydispersity, gel strength, and gelling temperature embodiments are individually combined. In another embodiment, they are all combined.

Suitable red seaweed polysaccharides for use in the present invention include agar, agarose and carrageenan. Preferably, the red seaweed polysaccharide is agar or agarose; more preferably, it is agarose.

In an embodiment, the polysaccharide is agar. As used herein, agar refers to a mixture of the polymers agarose and agaropectin. Preferably, the agarose:agaropectin weight ratio is 90:10 or lower, such as from 90:10 to 50:50, more particularly from 90:10 to 70:30. Agar is most commonly obtained from the red seaweed family *Gelidiaceae.* When obtained from other families, such *Gracilariaceae, Pterocladiaceae, Gelidiellaceae, Ahnfeltiaceae* or *Ceramiaceae* agar is sometimes referred to as agaroid, but is nevertheless considered agar for the purposes of this invention. Thus, in an embodiment, the agar is obtained from any of the above families, in particular from the *Gelidiaceae* family. Non-limiting examples of specific algae from which agar can be obtained are *Gelidium,* such as *Gelidium pacificum* or *Gelidium amansii, Gracilaria, Gelidiella, Pterocladia capillace, Pterocladia lucida, Ahnpheltia plicata, Acanthopheltis japonica, Ceramiun hypnaeordes* or *Geranium boydenii.*

In an embodiment, the weight-average molecular weight of the agar is between 17 000 and 500 000 g/mol, preferably between 80 000 and 420 000 g/mol.

In an embodiment, the polydispersity of the agar is between 1.3 and 4, preferably between 1.3 and 3.3.

Agar may be obtained by methods well known in the art. In fact, agar harvesting and isolation is known from as early as 1658, when it was first discovered by Minoya Tarozaemon in Japan. Such methods are described in detail in the Food And Agriculture Organization Of The United Nations Fisheries technical paper 288 "Production and utilization of products from commercial seaweeds", 1987, Chapter 1.

Alternatively, agar can be acquired from commercial sources, such as from Sigma-Aldrich (Ref. A7002) or Millipore (Ref. 05040).

In an embodiment, the agar used in the method of the present invention is dehydrated, and more particularly it is a xerogel. Dehydrated agar refers to an agar wherein water is present in an amount of less than 20%, preferably less than 5%, more preferably less than 1%, by weight with respect to the total weight of the agar. Dehydrated agar, in particular agar xerogels, can be obtained such as by freezing and thawing or by syneresis, of solutions comprising agar extracted from the seaweed.

In an embodiment, the agar used in the method of the present invention is in the form of a powder, flake, square or strip, preferably in the form of a powder.

In an embodiment, the polysaccharide is agarose. Agarose refers to a polymer comprising or consisting of repeating, in particular alternating, D-galactose and 3,6-anhydro-L-galactose units. The 3,6-anhydro-L-galactose is an L-galactose with an anhydro bridge between the 3 and 6 positions. The D-galactose is connected through $\alpha$-(1,3) bonds to the 3,6-anhydro-L-galactose, whereas the 3,6-anhydro-L-galactose is connected through $\beta$-(1,4) bonds to the D-galactose. In a particular embodiment, the polymer is linear.

In an embodiment, the sum of D-galactose and 3,6-anhydro-L-galactose units represent at least 50%, preferably at least 70%, more preferably at least 85%, by weight with respect to the total weight of the agarose polymer.

In an embodiment, the amount of D-galactose units with respect to the total weight of the agarose polymer ranges from 20 to 50%, such as from 35 to 50%, by weight.

In an embodiment, the amount of 3,6-anhydro-L-galactose units with respect to the total weight of the agarose polymer ranges from 20 to 50%, such as from 35 to 50%, by weight.

The agarose polymer may also comprise further saccharide units. For instance, it may comprise L-galactose units. In an embodiment, the amount of L-galactose units with respect to the total weight of the agarose polymer is at most 4% by weight.

The agarose polymer may comprise any of the above saccharide units in a methylated state (one or more OH groups in the saccharide unit are methylated to OMe), such as 6-O-methyl-D-Galactose or 2-O-methyl-L-galactose. In an embodiment, the amount of methylated units with respect to the total weight of the agarose polymer is at most 20%, such as at most 5%, by weight.

The agarose polymer may further comprise any of the above saccharide units in a sulfated state (one or more OH groups are sulfated to $OSO_3^-$), or the agarose might comprise residual agaropectin. In such a case, the sulfate content of the agarose polymer or of the agarose is less than 3%, preferably less than 1%, more preferably less than 0.5%, such as from 0.1 or from 0.2%.

The agarose polymer may comprise any of the above saccharide units in a pyruvated state (one or more OH groups are pyruvated). In an embodiment, the amount of pyruvated units with respect to the total weight of the agarose polymer does not exceed 1.5% by weight.

The agarose polymer may comprise xylose units. In an embodiment, the amount of xylose units with respect to the total weight of the agarose polymer does not exceed 1% by weight.

In an embodiment, the weight-average molecular weight of the agarose is between 17 000 and 200 000 g/mol, preferably between 100 000 and 170 000 g/mol.

In an embodiment, the polydispersity of the agarose is between 1.3 and 2.4.

In an embodiment, the above weight-average molecular weights and polydispersities of agarose are combined.

Agarose may be obtained from the same sources as described above for agar. Agarose may be obtained by methods well known in the art. Such methods are described in detail in the Food And Agriculture Organization Of The United Nations Fisheries technical paper 288 "Production and utilization of products from commercial seaweeds", 1987, Chapter 1.

Methods for obtaining agarose typically rely on separating it from agaropectin. The extent to which the agaropectin is removed from agarose depends on the method of separation that is employed. Thus, not all commercial agarose products are agaropectin-free. Reference to agarose in the field of the invention typically does not mean pure agarose, but agarose wherein agaropectin is present in reduced amounts when compared to those in agar, typically after purification of agarose from agar. When agarose is fee of agaropectin, this is usually referred to as high purity agarose. Therefore, in the context of the present invention, when the polysaccharide is said to be agarose, the polysaccharide comprises agaropectin in an amount of less than 10%, preferably less than 5%, more preferably less than 1%, yet more preferably less than 0.1% by weight, with respect to the combined weight of agarose and agaropectin, or is even more preferably devoid of agaropectin. From a strict patent point of view, agarose can be seen as a polymer mixture comprising agarose and agaropectin in the above stated amounts. Methods for obtaining different purity agaroses are described in GB 1 023 179. It is also common to refer to the amount of agaropectin in agarose indirectly by reference to the sulfate content of the agarose, as was described further above.

Another indirect measure is the electroendosmosis (EEO) value (-mr) of the agarose, which can be measured as described in Hu et al., Chinese Journal of Oceanology and Limnology, 2007, 25(4), 367-372. In an embodiment, the agarose has an EEO of less than 0.4, preferably less than 0.3, more preferably less than 0.2, such as between 0.13 and 0.17.

Alternatively, agarose can be acquired from commercial sources, such as from Scharlau (Ref. AG00300) or Sigma-Aldrich (Ref. A9539).

In an embodiment, the agarose used in the method of the present invention is dehydrated, and more particularly it is a xerogel. Dehydrated agarose refers to an agarose wherein water is present in an amount of less than 20%, preferably less than 5%, more preferably less than 1%, by weight with respect to the total weight of the agarose. Dehydrated agarose, in particular agarose xerogels, can be obtained such as by freezing and thawing or by syneresis, of solutions comprising agarose extracted from the seaweed.

In an embodiment, the agarose used in the method of the present invention is in the form of a powder, flake, square or strip, preferably in the form of a powder.

Agaropectin refers to a mixture of sulfated galactan polymers, wherein said galactans comprise or consist of repeating, preferably alternating, D-Galactose and L-Galactose units, and D-Galactose and/or L-Galactose units in a sulfated state, such as D-Galactose 4-sulfate, D-Galactose 2,6-disulfate or L-Galactose 6-sulfate. Any of the galactans may also comprise 3,6-anhydro-L-Galactose, 4,6-O-(1-carboxyethylidene)-D-Galactose or glucuronic acid units.

In an embodiment, the sulfate content in agaropectin is greater than 3%, such as between 5 and 15%.

Agaropectin may be obtained by methods well known in the art. Such methods are described in detail in the Food And Agriculture Organization Of The United Nations Fisheries technical paper 288 "Production and utilization of products from commercial seaweeds", 1987, Chapter 1.

In an embodiment, the polysaccharide is carrageenan. Carrageenan refers to a polysaccharide comprising or consisting of repeating, in particular alternating, D-Galactose units, which may or may not be sulfated. A first D-Galactose unit is connected through $\alpha$-(1,3) bonds to a second D-Galactose unit, whereas the second D-Galactose unit is connected through $\beta$-(1,4) bonds to the first D-Galactose unit. In some carrageenans, the second D-Galactose unit is replaced by a 3,6-anhydro-D-Galactose unit. These repeating units may be devoid of sulfate groups, such as in $\beta$-carrageenan, or may be - and in fact most commonly are - sulfated at any of their hydroxyl groups. Furthermore, the number of sulfated hydroxyl groups on each unit and the specific position of the sulfated hydroxyl group on the saccharide ring may vary, thus giving rise to different subtypes of carrageenans. Sulfation at the first D-Galactose unit is typically found at the 2- or 4- position of the saccharide ring; whereas sulfation at the second D-Galactose unit is typically found at the 2-, 6- or 2- and 6-positions of the saccharide ring, or at the 2-position in the case of the 3,6-anhydro-D-Galactose unit. In a particular embodiment, the polymer is linear.

In an embodiment, the sulfate content in the carrageenan is up to 40%, such as between 10 and 40%, in particular between 20 and 40%.

Examples of known carrageenans are $\kappa$-, $\beta$-, $\alpha$-, $\lambda$-, $\nu$-, $t$-, $\theta$-, $\mu$-, $\xi$- and $\delta$-carrageenan, as well as furcellaran. In an embodiment, the carrageenan is not $\lambda$-, $\xi$- and/or $\theta$- carrageenan. In another embodiment, the carrageenan is selected from $\kappa$-, $\mu$-, $\nu$- and $t$-carrageenan and furcellaran, more preferably from $\kappa$- and $t$-carrageenan.

In a preferred embodiment, the carrageenan is x-carrageenan. In x-carrageenan, sulfation in the first D-Galactose repeating unit is found at the 4- position of the saccharide ring; whereas the second unit is a non-sulfated 3,6-anhydro-D-Galactose unit.

Carrageenan polymers may further comprise any of the above saccharide units in a methylated or pyruvated state.

Carrageenans may be obtained from the red seaweed families *Gigartinaceae. Solieriaceae, Rhabdoniaceae, Hypneaceae, Phyllophoraceae, Furcellariaceae,* or *Rhodophyllidaceae.* In a particular embodiment, it is obtained from the *Gigartinaceae* and *Solieriaceae* families, and more particularly from the *Gigartinaceae* family. Non-limiting examples of specific algae from which carrageenan can be obtained are *Chondrus crispus, C. ocellatus, Gigartina stellata, G. acicularis, G. pistillata, G. canaliculata, G. chamissoi, G. radula, G. skottsbergii, Gymnogongrusfurcellatus, Eucheuma cottonii, E. spinosum, E. gelatinae, Furcellaria fastigiata, Hypneamusciformis,* and *H. spicifera.*

Carrageenan may be obtained by methods well known in the art. In fact, carrageenan harvesting and isolation has been known from as early as 600 B.C. Such methods are described in detail in the Food And Agriculture Organization Of The United Nations Fisheries technical paper 288 "Production and utilization of products from commercial seaweeds", 1987, Chapter 3.

In an embodiment, the weight-average molecular weight of the carrageenan is between 300 000 and 600 000 g/mol.

In an embodiment, the polydispersity of the carrageenan is between 2.3 and 5.1.

In an embodiment, the above weight-average molecular weights and polydispersities of the carrageenan are combined.

Alternatively, carrageenans can be acquired from commercial sources, such as from Acros Organics (Ref. 431591000) or Sigma-Aldrich (Ref. C1138, 22049).

In an embodiment, the carrageenan used in the method of the present invention is dehydrated, and more particularly it is a xerogel. Dehydrated carrageenan refers to a carrageenan wherein water is present in an amount of less than 20%, preferably less than 5%, more preferably less than 1%, by weight with respect to the total weight of the carrageenan. Dehydrated carrageenan, in particular carrageenan xerogels, can be obtained such as by freezing and thawing or by syneresis, of solutions comprising carrageenan extracted from the seaweed.

In an embodiment, the carrageenan used in the method of the present invention is in the form of a powder, flake, square or strip, preferably in the form of a powder.

In an embodiment, the red seaweed polysaccharide is not a carrageenan.

In an embodiment, the method of the invention does not comprise employing poly(vinyl alcohol) at any stage. In another embodiment, the method of the invention does not comprise employing xanthan at any stage. The gels of the present invention therefore do not comprise said poly(vinyl alcohol) or xanthan.

For the purposes of this invention, red seaweed polysaccharides as described above in any of its embodiments comprise derivatives thereof. Chemical derivatisation is typically achieved by methods known in the art, such as by hydrolysis, by sulfation or desulfation, by methylation, by acetylation, or by phosphorylation of the polysaccharide. Examples of such methods are reported in Matsuhiro etal., Journal of Applied Phy cology, 2014, 26(5):2011-2019; Wang et al., Int J Biol Macromol, 2016, 93(Pt A):600-608; Gu et al., Chem Cent J., 2017, 11:104; Yuan et al., Carbohydrate Research, 2005, 340(4):685-92. In another embodiment, red seaweed polysaccharides as described above in any of its embodiments do not comprise derivatives thereof, in particular derivatives of any of the above specified types.

In any embodiment described herein referring to sulfated units, any or all of the sulfate groups may form a salt with a counteraction, such a metal cation as described above.

It is understood that the red seaweed polysaccharide that is mixed in step a) of the method of the invention refers to a polysaccharide that has been extracted from the plant. In an embodiment, what is mixed in step a) is a composition comprising at least 70%, preferably at least 90%, more preferably at least 99%, by weight red seaweed polysaccharide with respect to the total weight of the composition.

In a preferred embodiment, step a) is carried out by adding the solution comprising the metal hydroxide to the red seaweed polysaccharide. More particularly, the solution comprising the metal hydroxide is poured onto the red seaweed polysaccharide

It is understood that the metal hydroxide is comprised in the solution in the form of metal ions and hydroxide ions. In a preferred embodiment, the solution comprising the metal hydroxide is an aqueous solution, such as a water solution. In another embodiment, the solution comprising the metal hydroxide is an ionic liquid solution, i.e. a solution wherein the ionic liquid is the solvent.

In an embodiment, in the solution comprising a metal hydroxide, the concentration of hydroxide in said solution is at least 1.21 mol/L, and/or the concentration of metal in said solution is at least 2.79 mol/L

In the solution comprising metal hydroxide, the concentration of hydroxide is at least 1.21 mol/L. In a preferred embodiment, it is at least 1.51 mol/L, more preferably at least 1.82 mol/L, even more preferably at least 2.12 mol/L such as at least 2.42 mol/L. In another embodiment, the concentration of hydroxide is at most 4.24 mol/L, preferably it is at most 3.63 mol/L, more preferably at most 3.03 mol/L, such as at most 2.72 mol/L. In an embodiment, each of these limit values is combined to generate individual ranges. In a preferred embodiment, the concentration of hydroxide is between 1.21 mol/L and 3.03 mol/L, more preferably it is between 1.51 mol/L and 2.72 mol/L, such as between 1.82 mol/L and 2.42 mol/L, and yet more preferably it is between 2.12 mol/L and 2.72 mol/L. In a preferred particular embodiment, the concentration of hydroxide is 2.42 mol/L.

In a more preferred embodiment, in the solution comprising metal hydroxide, the concentration of hydroxide is at least 2 mol/L, such as at least 3 mol/L or such as at least 4 mol/L. Preferably, it is at least 5 mol/L, such as at least 7 mol/L. In an embodiment, the concentration of hydroxide is at most 14 mol/L, preferably it is at most 12 mol/L, such as at most 10 mol/L, or at most 9 mol/L. In an embodiment, each of these limit values is combined to generate individual ranges. More preferably, the concentration of hydroxide is between 4 mol/L and 10 mol/L, even more preferably between 5 mol/L and 9 mol/L, such as between 6 mol/L and 8 mol/L, and yet more preferably it is between 7 mol/L and 9 mol/L. In a preferred particular embodiment, the concentration of hydroxide is 8 mol/L.

In the solution comprising metal hydroxide, the concentration of metal is at least 2.79 mol/L. In a preferred embodiment, it is at least 3.49 mol/L, more preferably at least 4.18 mol/L, even more preferably at least 4.88 mol/L such as at least 5.58 mol/L. In another embodiment, the concentration of metal is at most 9.76 mol/L, preferably it is at most 8.37 mol/L, more preferably at most 6.97 mol/L, such as at most 6.28 mol/L. In an embodiment, each of these limit values is combined to generate individual ranges. In a preferred embodiment, the concentration of metal is between 2.79 mol/L and 6.97 mol/L, more preferably it is between 3.49 mol/L and 6.28 mol/L, such as between 4.18 mol/L and 5.58 mol/L, and yet more preferably it is between 4.88 mol/L and 6.28 mol/L. In a preferred particular embodiment, the concentration of metal is 5.58 mol/L.

In a more preferred embodiment, in the solution comprising metal hydroxide, the concentration of metal is at least 2 mol/L, such as at least 3 mol/L or such as at least 4 mol/L. Preferably, it is at least 5 mol/L, such as at least 7 mol/L. In an embodiment, the concentration of metal is at most 14 mol/L, preferably it is at most 12 mol/L, such as at most 10 mol/L, or at most 9 mol/L. In an embodiment, each of these limit values is combined to generate individual ranges. More preferably, the concentration of metal is between 4 mol/L and 10 mol/L, even more preferably between 5 mol/L and 9 mol/L, such as between 6 mol/L and 8 mol/L, and yet more preferably it is between 7 mol/L and 9 mol/L. In a preferred particular embodiment, the concentration of metal is 8 mol/L.

The metal can be selected from alkali, alkaline earth, or transition metal cations, preferably from alkali and alkaline earth metal cations, more preferably alkali metal cations. Examples of suitable alkali metal cations are $Li^+$, $K^+$, $Na^+$, $Rb^+$ or $Cs^+$, preferably $Li^+$, $K^+$, or $Na^+$. Examples of suitable alkaline earth metal cations are $Ca^{2+}$, $Mg^{2+}$, $Sr^{2+}$ or $Ba^{2+}$. An example of a suitable transition metal cation is $Fe^{3+}$. In an embodiment, the solution comprising metal hydroxide comprises different metal hydroxides, which may be selected from hydroxides of the above described cations. In an embodiment, the concentration of metal is increased by adding to the solution comprising the metal hydroxide a species comprising metal cations as described above. In an embodiment, the solution comprising the metal hydroxide comprises cations in different oxidation states, such as both alkali and alkaline earth metal cations.

In a preferred embodiment, the metal is $K^+$, in other words, the metal hydroxide is KOH.

As described further below, the choice of the metal and its specific concentration can aid in fine-tuning the gelification process and is therefore decided based on the needs of each case.

In the solution comprising the metal hydroxide, preferably KOH, the concentration of metal hydroxide is at least 4 mol/L. In a preferred embodiment, it is at least 5 mol/L, such as at least 7 mol/L. In another embodiment, the concentration of metal hydroxide is at most 14 mol/L, preferably it is at most 12 mol/L, such as at most 10 mol/L, or at most 9 mol/L. In an embodiment, each of these limit values is combined to generate individual ranges. In a preferred embodiment, the concentration of metal hydroxide is between 4 mol/L and 10 mol/L, more preferably between 5 mol/L and 9 mol/L, such as between 6 mol/L and 8 mol/L, and yet more preferably it is between 7 mol/L and 9 mol/L. In a preferred particular embodiment, the concentration of metal hydroxide is 8 mol/L. In a further embodiment, the invention relates to any aspect or embodiment as described herein, wherein the concentration of metal hydroxide is at least 2 mol/L, such as at least 3 mol/L, more particularly between 2 mol/L, such as 3 mol/L, and any of the top concentration values provided elsewhere herein. The solution is preferably an aqueous solution, more preferably a water solution. The red seaweed polysaccharide is preferably agarose, and is preferably present in an amount between 0.1 and 10%, most preferably between 1.5 and 2.5%, such as 2%, by weight with respect to the total weight of the initial mixture.

Thus, an embodiment relates to a method for preparing a gel, the method comprising the steps of:

a) Mixing:

- at least one red seaweed polysaccharide; and
- a solution comprising a metal hydroxide, preferably KOH, wherein the concentration of metal hydroxide in said solution is at least 2 mol/L, preferably at least 3 mol/L, more preferably at least 4 mol/L, more particularly between 4 mol/L and 10 mol/L;

to obtain an initial mixture;
b) Heating the initial mixture obtained in step a) to a melting temperature of the red seaweed polysaccharide, to obtain a melt mixture;
c) Gelating the melt mixture obtained in step b).

In an embodiment, the solution comprising metal hydroxide further comprises a neutralizing additive. The neutralizing additive is an additive that reduces the basicity of the solution comprising metal hydroxide. Examples of suitable neutralizing additives are metal or ammonium chlorides. The metal in this metal chloride can be selected from alkali, alkaline earth, or periodic table Group 12 to 15 metal cations. Examples of suitable alkali metal cations are $Li^+$, $K^+$, $Na^+$. An example of a suitable alkaline earth metal cation is $Mg^{2+}$. Examples of suitable periodic table Group 12 to 15 metal cations are $Pb^{2+}$, $Pb^{4+}$, $Hg^+$, $Hg^{2+}$, $Cd^{2+}$, $Bi^{3+}$, $Sn^{2+}$, $Sn^{4+}$. In a preferred embodiment, the neutralizing additive is $ZnCl_2$ or $NH_4Cl$ or a mixture thereof.

In an embodiment, the amount of red seaweed polysaccharide added in step a) is of between 0.1 and 10%, preferably between 0.5 and 5%, more preferably between 1 and 3%, most preferably between 1.5 and 2.5%, such as 2%, by weight with respect to the total weight of the initial mixture. Similarly, the gel of the present invention comprises the red seaweed polysaccharide in an amount of between 0.1 and 10%, preferably between 0.5 and 5%, more preferably between 1 and 3%, most preferably between 1.5 and 2.5%, such as 2%, by weight with respect to the total weight of the gel.

In step b) of the method of the present invention, the initial mixture obtained in step a) is heated to a melting temperature of the red seaweed polysaccharide. The purpose of this step is to melt the polysaccharide.

The melting temperatures of red seaweed polysaccharides are well known to or are easily determined by the person skilled in the art. A common method to determine such temperature or temperature range is differential scanning calorimetry, such as by the method reported in Watase et al., Polymer Journal, 1986, 18(12): 1017-1025. The melting temperature of the red seaweed polysaccharides typically lies in the range 50 to 95 °C. As a general approximation, the higher the sulfate content of the red seaweed polysaccharide, the lower its melting point. Thus, for instance, agarose, which comprises a relatively low sulfate content as described above, typically melts in the range 75 to 95 °C, whereas carrageenans usually melt at a lower temperature range, depending on the degree of sulfation of each carrageenan. In an embodiment, the initial mixture is heated to boiling temperature (when this is higher than the melting point of the red seaweed polysaccharide), such as from the boiling point of the mixture to any temperature below the decomposition temperature of the red seaweed polysaccharide.

In a preferred embodiment, the heating of step b) is performed by exposing the initial mixture to radiant energy in the microwave range, such as at a radiant energy of between 100 and 700 Watt, preferably of between 150 and 350 Watt, in particular of 250 Watt. This may be performed in a microwave oven. In an embodiment, the initial mixture is heated to boiling temperature (when this temperature is higher than the melting temperature of the red seaweed polysaccharide), such as from the boiling point of the mixture to any temperature below the decomposition temperature of the red seaweed polysaccharide. The exposure to radiant energy in the microwave range may be performed for a time of between 1 to 10 minutes, such as of between 3 and 6 minutes, such as of between 4 and 5.5 minutes.

In a preferred embodiment, the initial mixture is subjected to stirring during heating. Alternatively, periods of heating are alternated with periods of stirring. This aids in obtaining a more homogeneous melt mixture in step b).

Step c) of the method of the invention comprises gelating the melt mixture obtained in step b).

The gelation process involves a transition from a disordered state of the polysaccharide polymer strands (aka random coil state) present in the melt mixture to an ordered helical network conformation of said strands, as was explained above.

In an embodiment, gelation is achieved by bringing the temperature of the melt mixture to a gelation (aka gel, gelling) temperature (aka point) of the melt mixture. The gel temperature of the melt mixture typically corresponds to the gel temperature of the red seaweed polysaccharide, although said gel temperature may be modulated as described below. Bringing the temperature of the melt mixture to the gelation temperature is typically achieved by cooling the melt mixture.

The gel temperatures of red seaweed polysaccharides are well known to the person skilled in the art. The gel temperature of the red seaweed polysaccharides typically lies in the range 30 to 65 °C. For instance, agaroses and agars typically gel in the range 30 to 45 °C, whereas carrageenans typically gel in the range 35 to 65 °C.

Alternatively, the skilled person knows how to easily determine gel temperatures, as was described above.

What cooling temperature the melt mixture is subjected to in step c) depends on how quickly one wishes to attain the gelation temperature.

In an embodiment, cooling is performed by gradually reducing the temperature in a controlled manner, such as by reducing the temperature at a rate between 0.1 °C/min and 5 °C/min, preferably between 0.1 °C/min and 1.5 °C/min, more preferably between 0.5 °C/min and 1.0 °C/min.

In another embodiment, cooling is performed by subjecting the melt mixture to room temperature.

In another embodiment, cooling is performed by subjecting the melt mixture to temperatures lower than room temperature, such as between 0.1 °C and lower than room temperature, in particular between 10 °C and lower than room temperature. This may be achieved by bringing a vessel containing the melt mixture into contact with a water bath at the stated temperatures.

The gel point, the extent of gelation, and the rate of gelation may be fine-tuned by different factors.

The present inventors have found that the higher the concentration of metal in the solution comprising metal hydroxide of step a), the higher the gel point of the melt mixture is and the more rapidly gelation occurs in step c).

For instance, when the polysaccharide is agarose, metal concentrations of 10 mol/L or higher in step a) lead to rapid gelation in step c), such as in a minute or less, as soon as the melt mixture is allowed to cool under room temperature upon completion of step b).

When the metal concentration is between lower than 10 mol/L and higher than 6 mol/L in step a), the melt mixture may be subjected to temperatures lower than room temperature in step c) as described above; this is done in order to more rapidly attain the gelation temperature, which is lower than in the 10 mol/L case, and thus to obtain similar gelation times as in said 10 mol/L case.

As the metal concentration is lowered to 6 mol/L or lower in step a), gelation time increases considerably and the gelation temperature usually corresponds to that reported for standard agarose in the art as described above. In these cases, the melt mixture is typically subjected to temperatures lower than room temperature in step c) as described above, in order for the melt mixture to more rapidly attain the gelation temperature. Once the gelation temperature attained, the melt mixture is maintained at said temperature, such as in an oven, such as at 36 °C, until it gelates. Alternatively, it has been found that cooling the melt mixture to below the gelation temperature of agarose, such as to room temperature, followed by raising the temperature to the gelation temperature of agarose, can reduce the time that it is necessary to maintain the melt mixture at the gelation temperature for gelation to occur. Thus, in an embodiment, step c) of method of the invention comprises firstly cooling the melt mixture to below the gelation temperature of the red seaweed polysaccharide, such as to room temperature, and then increasing the temperature to reach the gelation temperature of the red seaweed polysaccharide, and maintaining it at said gelation temperature until gelation occurs.

It has also been found that the higher the sulfate content in the red seaweed polysaccharide, the lesser the extent of gelation.

Thus, when weaker gels are desired, higher sulfate content polysaccharides may be chosen, such as polysaccharides obtainable from the red seaweed comprising a higher sulfate content, or polysaccharides obtainable from the red seaweed comprising a lower sulfate content which have been subjected to sulfation as described above. Conversely, if stronger gels are desired, lower sulfate content polysaccharides may be chosen, such as polysaccharides obtainable from the red seaweed comprising a lower sulfate content, or polysaccharides obtainable from the red seaweed comprising a higher sulfate content which have been subjected to desulfation as described above. Alternatively, the higher the concentration of metal in the solution comprising metal hydroxide of step a), the more the sulfate groups will be shielded and the more their gel-weakening effect will be cancelled during the gel formation of the gel in step c).

The strength of the gel may also be tuned by the degree of methylation of the polysaccharide, higher methylation levels yielding stronger gels.

Additionally, slower cooling rates down to the gel point in step c) increase the extent of gelification.

In another aspect, the invention relates to a gel comprising a red seaweed polysaccharide network comprising interstices, wherein said interstices comprise a solution comprising a metal hydroxide. The concentration of hydroxide in said solution is at least 1.21 mol/L, and/or wherein the concentration of metal in said solution is at least 2.79 mol/L. In an embodiment, the concentration of hydroxide in said solution is at least 4 mol/L, and/or the concentration of metal in said solution is at least 4 mol/L. In further embodiments, the concentration of hydroxide and/or metal in said solution is that which was described further above for the method of the invention. More particularly, the gel polysaccharide network is non-fluid. More particularly, the network is expanded throughout its volume by the solution comprising the metal hydroxide. The interstices (aka cavities or pores) refer to the spaces within the network that are delimited by the network polymer strands. Since the gels of the present invention act as a solid electrolyte, it is understood that the interstices of the gel network are interconnected such that ions, in particular hydroxide ions, can travel through the network from cathode to anode and vice versa. The network is preferably a three-dimensional network.

In an embodiment, the network comprises the red seaweed polysaccharide in an amount of at least 50, 80 or 95% by weight. In another embodiment, the network consists of the red seaweed polysaccharide.

In the gel of the invention, the polysaccharide is preferably agar or agarose, more preferably it is agarose.

In a particularly preferred embodiment, the gel of the invention is one obtainable by the method of the first aspect of the invention as described in any of the above embodiments.

In further embodiments, the different components of the gel have the meaning described in the embodiments for the method of the invention.

The invention also relates to a metal-air electrochemical cell comprising a gel according to the present invention as an electrolyte. Metal-air electrochemical cells are well known in the prior art and are reviewed for instance in Wang et al., Appl. Sci., 2019, 9(14), 2787. During discharge, oxygen at the cathode is reduced to hydroxide, whereas the metal at the anode is oxidized; the reverse process applying during charging.

Metal-air electrochemical cells according to the present invention comprise an anode; a cathode; and an electrolyte which is a gel according to the present invention in contact with the anode and the cathode, in particular in between the anode and the cathode. The electrochemical cells of the present invention require no separator since the electrolyte, which is a solid gel, itself typically physically separates the anode and cathode.

In the present invention, the gel comprising the red seaweed polysaccharide is not merely an electrolyte reservoir, but is the electrolyte itself. The gel electrolyte of the present invention enables the transport of hydroxide ions from the cathode to the anode and *vice versa.*

In an embodiment, the thickness of the electrolyte is greater than that of the electrodes. In an embodiment, the electrochemical cell of the present invention does not comprise a hydroponic gel. In particular, it does not comprise a hydroponic gel comprising KOH. More particularly, it does not comprise a hydroponic gel or a hydroponic gel comprising KOH as electrolyte.

The anode preferably comprises or consists of metal, or an alloy of such metal, such as a metallic alloy, or an oxide of said metal. More preferably, the anode comprises or consists of metal. The metal can be that identified in the name of the metal-air electrochemical cell. In an embodiment, the metal-air electrochemical cell is an alkali metal-air cell, an alkaline earth metal-air cell, or a first-row transition metal-air cell. In an embodiment, the metal-air electrochemical cell is a lithium-, sodium-, potassium-, zinc-, magnesium-, calcium-, aluminum-, or iron-air electrochemical cell. More preferably, it is a zinc-, aluminum- or iron-air electrochemical cell. Most preferably, it is a zinc-air electrochemical cell. An example of a metal alloy is Zn-Al, and an example of a metal oxide is ZnO. In an embodiment, the metal-air electrochemical cell is not an aluminum-air electrochemical cell.

When the anode comprises the metal, alloy or oxide thereof, it does so in an amount of at least 50%, preferably at least 80%, with respect to the total weight of the anode.

The cathode comprises a diffusion layer through which air, and more particularly oxygen, can diffuse, and a catalytic layer comprising catalyst capable of reversibly catalyzing the reaction of the diffusing oxygen and water from the electrolyte to form hydroxide.

Examples of catalysts used in the catalytic layer are platinum or silver; transition metal oxides, such as ruthenium, iridium, manganese, cobalt, or nickel oxides;

transition metal hydroxides, such as NiCoFe-layered double hydroxides; transition metal nitrides, such as cobalt nitrides; transition metal sulfides, such as cobalt nickel sulfides; spinel-type oxides, such as of formula $A_xB_{3-x}O_4$ (A and B are transition metals), e.g. $CuCo_2O_4$; perovskite oxides, such as of formula $ABO_3$ (A and B are transition metals), such as of formula $LaNi_{1-x-y}Cu_xFe_yO_3$; carbon-based materials, such as carbon nanotubes or nitrogen-doped graphene; composite materials comprising catalyst capable of catalyzing the reaction in one direction and catalyst capable of catalyzing the reaction in the reverse direction, such as Fe-N-C and NiFe, or $MnO_2$ and $RuO_2$; or mixtures of these. A number of specific examples are reported in Stock et al., ACS Energy Lett., 2019, 4:1287-1300, all of which are herein incorporated by reference. The cathode, and in particular the catalytic layer, may further comprise a binder, such as carboxymethyl cellulose (CMC), polyethylene, polypropylene, polytetrafluoroethylene (PTFE), polyvinylidene fluoride (PVDF), styrene-butadiene rubber, tetrafluoroethylene-hexafluoroethylene copolymer, tetrafluoroethylene-hexafluoropropylene copolymer (FEP), tetrafluoroethylene-perfluoroalkyl vinyl ether copolymer (PFA), vinylidene fluoride-hexafluoropropylene copolymer, vinylidene fluoride-chlorotrifluoroethylene copolymer, ethylene-tetrafluoroethylene copolymer (ETFE resin), polychlorotrifluoroethylene (PCTFE), vinylidene fluoride-pentafluoro propylene copolymer, propylene-tetrafluoroethylene copolymer, ethylene-chlorotrifluoroethylene copolymer (ECTFE), vinylidene fluoride-hexafluoropropylene-tetrafluoroethylene copolymer, vinylidene fluoride-perfluoromethylvinylether-tetrafluoroethylene copolymer, ethylene-acrylic acid copolymer, or any mixture of the above. The binder is preferably present in an amount of 10% or less by weight with respect to the total weight of the catalytic layer so as to not excessively minimize the amount of catalyst in the catalytic layer and hence catalytic activity.

In an embodiment, the electrochemical cell according to the present invention comprises an anode comprising or consisting of zinc.

In an embodiment, the electrochemical cell according to the present invention comprises a cathode wherein the catalytic layer comprises a transition metal oxide, preferably $MnO_2$, as catalyst.

In a preferred embodiment, the electrochemical cell according to the present invention comprises: an anode comprising or consisting of zinc; an electrolyte according to the present invention, which is preferably agar or agarose; and a cathode wherein the catalytic layer comprises a transition metal oxide, preferably $MnO_2$, as catalyst.

It is understood that the anode and the cathode comprise a current collector. A circuit may be formed by electrically connecting an electrical load to the anode current collector and the cathode current collector. Examples of current collectors are tin, stainless steel, copper, nickel or carbon paper, such as plates thereof. In the case of the cathode current collector, the collector is preferably porous so as to not interfere with the diffusion of air, and in particular oxygen, through the cathode.

The electrochemical cell may be in any shape, such as button-shaped (i.e. substantially flat and round or oval surface), rectangular, cylindrical or prismatic.

In an embodiment, the electrochemical cell is comprised within a housing, wherein the housing is permeable to air.

The invention also more generally relates to an electrochemical cell comprising, as an electrolyte, an agar or agarose gel, preferably agarose gel, comprising a solution comprising a metal hydroxide. The electrochemical cell may be a metal-air electrochemical cell as described above. The solution comprising a metal hydroxide may be as in any embodiment described above. The agar or agarose may be present in any form or amount as in any embodiment described above.

The invention also relates to a NiMH, NiZn or NiCd electrochemical cell comprising a gel according to the present invention as an electrolyte.

The invention also relates to a battery comprising one or more electrochemical cells according to the present invention. The cells may be assembled in parallel or in series, or both. In an embodiment, any, several or each of the cells is connected to a module for monitoring cell performance, e.g. for monitoring cell temperature, voltage, charge status or current. Methods of battery assembly are well-known in the art and are reviewed for instance in: Maiser, Review on Electrochemical Storage Materials and Technology, AIP Conf. Proc. 1597, 204-218 (2014).

The invention also relates to a supercapacitor comprising a gel according to the present invention as an electrolyte.

The present invention is also directed to a vehicle, an electronic device or an electrical grid comprising an electrochemical cell or a battery according to the present invention.

Similarly, the invention is directed to the use of an electrochemical cell or a battery according to the present invention, for storing energy, and more particularly for storing energy in a vehicle, an electronic device or an electrical grid.

The vehicle can be an automobile, in particular a heavy automobile such as buses or trucks, a rail vehicle, a marine vehicle, an aircraft or a spacecraft.

Preferably, the electronic device is a portable electronic device, such as a laptop, a tablet, a cellular phone, a smart phone or a smart watch.

Preferably, the electrical grid is associated to a solar panel or a wind turbine.

The invention is further illustrated, but not limited by, the following examples.

## Examples

### Example 1 - Preparation of electrolytes according to the invention

Agarose gel:

25 ml of KOH (Scharlab) aqueous solution is added to the corresponding amount (0.53g for 2 M, 0.57g for 4 M, 0.61g for 6 M, 0.64g for 8 M, 0.67g for 10 M, where M refers to the KOH molarity) of agarose (2wt%) (Scharlab). After mixing both components, the mixture is placed inside the microwave at 250 W (MILESTONE, RotoSynth, Rotative Solid-Phase, Microwave reactor). After heating the sample during 3 minutes, the mixture is hand shaken to ensure a good homogeneity of the mixture and heated again during the total heating time (4 min for 2, 4 and 10 M; 5 min for 6 and 8 M). For 6 and 8 M, the mixture us hand shaken 3 times in total (in the $3^{rd}$ minute, $4^{th}$ and the $5^{th}$). As a result, a yellowish transparent solution is obtained. Subsequently, for 2, 4 and 6 M solutions, the mixture is immersed in a water bath (water bath is not required for 10 M because the gel is formed instantaneously) until its gelation temperature was reached and immediately poured into a petri dish. The samples were kept 1h in the oven at 36°C by introducing the petri dish in an oven (Thermo Scienific, oven-lab, Heraeus) previously heated at 36°C. After that, the samples were kept at room temperature until the final gel was obtained. Depending on the KOH molarity, the time required for obtaining a gel varies significantly. In the case of the solution of 8 M, it also jellifies rapidly, so the mixture is first poured into a petri dish and immediately immersed in a water bath for 3 minutes.

The best performing conditions for the agarose polymer electrolyte (8 M KOH, 2% wt. polysaccharide) were additionally tested employing agar or x-carrageenan as the polysaccharide.

Agar gel:

0.64g of agar (2wt%) (Scharlab) is added to 25 ml of KOH (Scharlab) aqueous solution with a molarity of 8 M. After mixing both components, the mixture is placed inside the microwave at 250 W (MILESTONE, RotoSynth, Rotative Solid-Phase, Microwave reactor). After heating the sample during 3 minutes, the mixture is hand shaken to improve homogeneity of the mixture. This procedure is repeated twice for a minute with a total heating time of 5 min. As a result, a yellowish transparent solution is obtained. Subsequently, the mixture is poured into a petri dish and immediately immersed in a water bath for 3 minutes. The gel is formed in 15 minutes at room temperature.

κ-carrageenan gel:

0.64g of K-carrageenan (2wt%) (Scharlab) is added to 25 ml of KOH (Scharlab) aqueous solution with molarity of 8 M. After mixing both components, the mixture is placed inside microwave at 250 W (MILESTONE, RotoSynth, Rotative Solid-Phase, Microwave reactor). After heating the sample during 3 minutes, the mixture is hand shaken to improve homogeneity of the mixture. This procedure is repeated twice for a minute with a total heating time of 5 min. As a result, a yellowish transparent solution is obtained. Subsequently, the mixture is poured into a petri dish and immediately immersed in a water bath for 3 minutes. The gel is not formed immediately; 45h are required to form a gel (42.5 at room temperature, followed by 0.5h at 50°C in an oven (Thermo Scienific, oven-lab, Heraeus) and 2h at room temperature).

*Example 2 - Preparation of a Zinc-air electrochemical cell according to the invention*

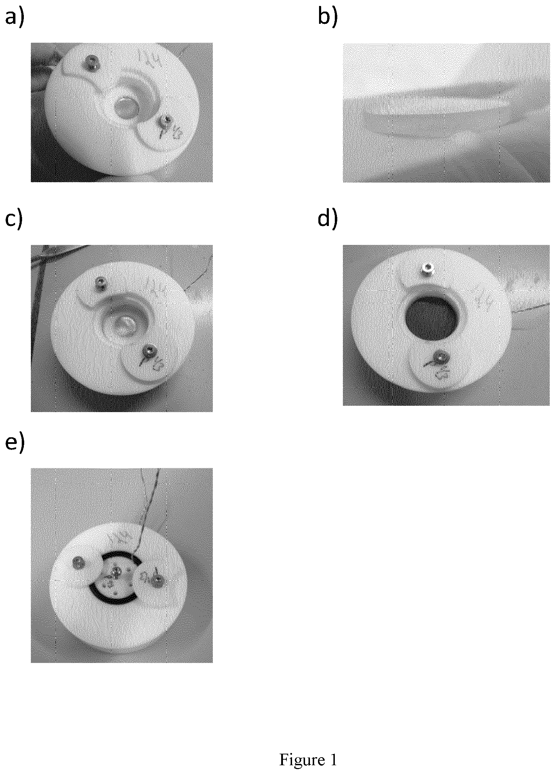

The electrolyte gels of Example 1 were punched with a 3mm punch tool and assembled into a Teflon cell to test their performance in a standard Zinc-air battery configuration. The process is depicted in Figure 1.

a) Anode is placed on the bottom of the Teflon cell, in contact with a current collector placed underneath, b) Electrolyte gel is punched with a 24mm punch tool. c) The 24mm punched electrolyte is deposited on top of the anode. d) Afterwards, the cathode is deposited on top of the electrolyte. e) To finish assembling the cell, the current collector is placed following by the closure of the cell.

*Example 3 - Electrochemical testing*

*Example 3.1 - Conductivity*

The conductivity of the electrolyte of Example 1 employing agarose as the red seaweed polysaccharide and of corresponding electrolytes wherein the amount of agarose was varied was measured by Electrochemical Impedance Spectroscopy (EIS) using a Solartron 1260A Impedance/Gain-Phase Analyzer. A CR2032 coin cell was used for measuring the ionic conductivity; the gel electrolyte is placed in the middle of a Teflon film in order to avoid a short circuit. The value for the electrolyte resistance is obtained from the intercept of the Nyquist plot with the x axis. The ionic conductivity of the membrane is then calculated using the following equation:

$$\sigma = \frac{t}{A} \cdot \frac{1}{R}$$

wherein t, A, and R are the thickness, area, and resistance of the membrane, respectively. The thickness of the membrane was measured after performing the EIS measurements.

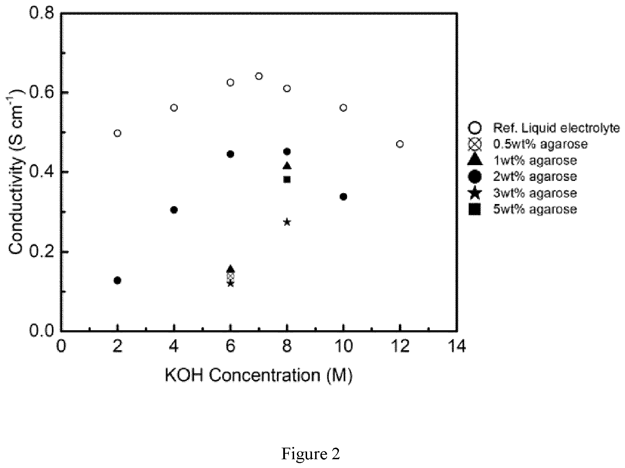

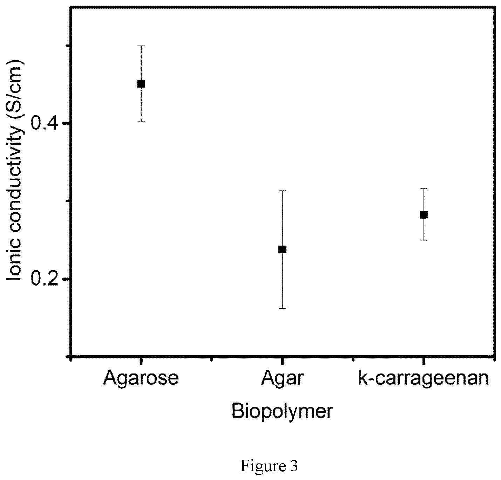

The conductivities obtained for different KOH molarities are shown in Figure 2. The conductivity measured for electrolytes according to the present invention is surprisingly similar to that generally reported for liquid electrolytes ($0.5$ S cm$^{-1}$). The best performing conditions (8 M KOH, 2% wt. polysaccharide) were additionally tested employing agar or x-carrageenan as the polysaccharide, and good conductivities (about $0.3$ S cm$^{-1}$) were also observed (Figure 3).

*Example 3.2 - Discharge capacity and zinc utilization*

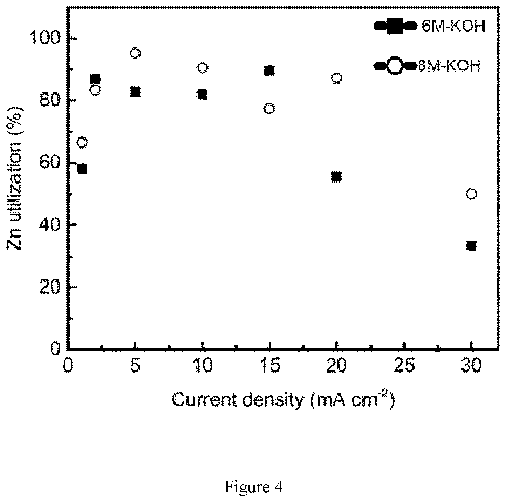

Electrochemical cells were assembled according to Example 2 using the 6 and 8 M KOH, 2% wt agarose electrolytes, as these performed best in the conductivity tests. The full discharge capacity of the cells was studied for different current densities and the zinc utilization is reported in Figure 4. Zinc utilization is defined as the percentage of the theoretical capacity of the zinc mass that is actually used when the electrode is fully discharged (0.8 V). Zinc utilization at current densities from 1 to 30 mA cm$^{-2}$ was shown to be exceptional, approximating 100% at certain specific current densities.

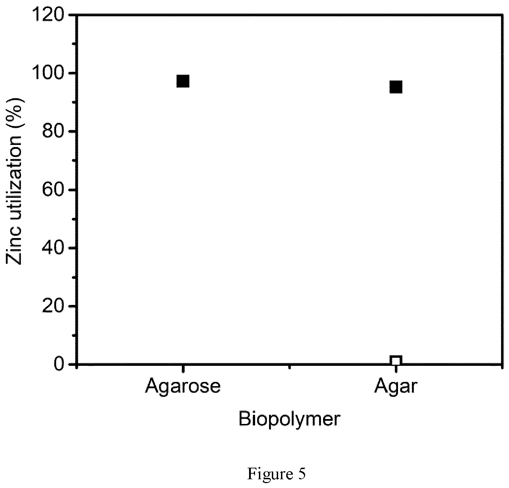

Comparative tests were carried out with agar electrolytes in order to demonstrate the effect of the method of the present invention on electrochemical performance. The zinc utilization of an electrochemical cell comprising agar as electrolyte (8 M KOH, 2% wt polysaccharide) and prepared as described in Example 1 was measured at a current density of 5 mA cm$^{-2}$, and was compared to that of an electrochemical cell wherein the electrolyte was prepared by soaking an already formed agar gel in water media with aqueous KOH electrolyte (2.78 M). As is evident from Figure 5, the electrolyte according to the present invention yielded a substantial increase in zinc utilization (97%) when compared to the comparative electrolyte (7%).

Further comparative gel electrolytes were subjected to the same test.

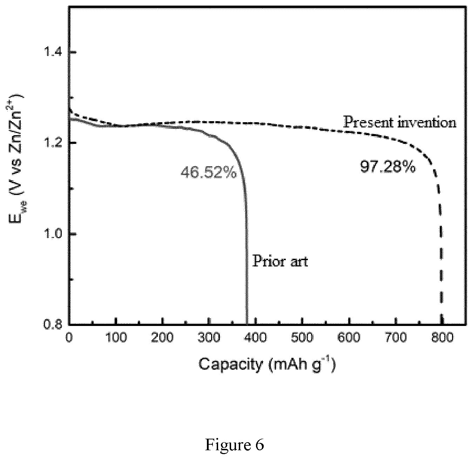

The second comparative electrolyte was prepared following the procedure reported in Di Palma et al., Carbohydrate Polymers, 157 (2017) 122-127. Specifically, 8 M KOH solution was added to agarose, followed by fast mixing at 200 rpm for 30 minutes and heating below the melting temperature of the polysaccharide. The obtained gel was subjected to the same discharge test as above. Results are depicted in Figure 6 and show that the second comparative electrolyte performed poorly when compared to the electrolyte of the present invention in terms of zinc utilization (46%) and capacity.

It was furthermore observed that the second comparative electrolyte also led to worsened conductivities (by one order of magnitude) and mechanical properties (such as flexibility) than the electrolyte of the present invention.

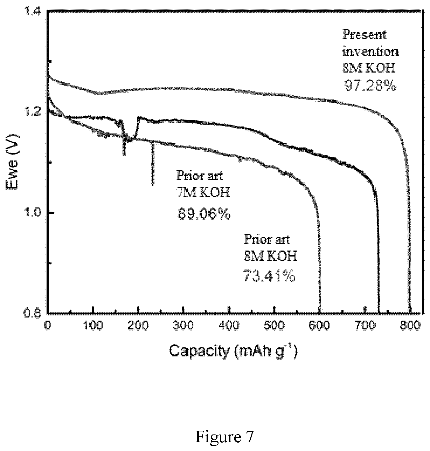

The third comparative electrolyte was prepared following the procedure reported in CN111224153A. Specifically, 0.5 M KOH solution was added to agarose, followed by heating to a melting temperature of agarose, gelling, and immersing the formed gel in 7 M or 8 M KOH solution. The obtained gel was subjected to the same discharge test as above. Results are depicted in Figure 7 and show that the third comparative electrolyte performed more poorly than the electrolyte of the present invention in terms of zinc utilization (73% for 8 M KOH) and capacity.

It was furthermore observed that the third comparative electrolyte also led to worsened mechanical properties (such as flexibility) than the electrolyte of the present invention.

**Claims**

1. Method for preparing a gel, the method comprising the steps of:

    a) Mixing:

    - at least one red seaweed polysaccharide; and
    - a solution comprising a metal hydroxide, wherein the concentration of hydroxide in said solution is at least 1.21 mol/L, and wherein the concentration of metal in said solution is at least 2.79 mol/L;

    to obtain an initial mixture;
    b) Heating the initial mixture obtained in step a) to a melting temperature of the red seaweed polysaccharide, to obtain a melt mixture;
    c) Gelating the melt mixture obtained in step b).

2. Method according to claim 1, wherein the red seaweed polysaccharide is a galactan.

3. Method according to any one of claims 1 or 2, wherein the red seaweed polysaccharide is selected from agar, agarose and carrageenan.

4. Method according to any one of claims 1 to 3, wherein the red seaweed polysaccharide is selected from agar and agarose.

5. Method according to any one of claims 1 to 4, wherein the red seaweed polysaccharide is agarose.

6. Method according to claim 5, wherein the amount of red seaweed polysaccharide in the initial mixture is between 1.5 and 2.5% with respect to the total weight of the initial mixture.

7. Method according to any one of claims 1 to 6, wherein the concentration of metal hydroxide in said solution is at least 3 mol/L.

8. Method according to any one of claims 1 to 7, wherein the concentration of metal hydroxide in said solution is between 5 mol/L and 9 mol/L.

9. Method according to any one of claims 1 to 8, wherein the metal hydroxide comprised in said solution is potassium hydroxide.

10. Gel obtainable by the method of any one of claims 1 to 9.

11. Use of a gel as defined in claim 10 as an electrolyte.

12. Metal-air electrochemical cell comprising:

    - An anode;
    - A cathode; and
    - An electrolyte, wherein the electrolyte is a gel as defined in claim 10.

13. Metal-air electrochemical cell according to claim 12, which is a zinc-air electrochemical cell.

14. Metal-air electrochemical cell according to any one of claims 12 to 13, wherein the anode is zinc metal and the cathode comprises $MnO_2$.

15. Vehicle, electronic device or electrical grid comprising an electrochemical cell as defined in any one of claims 12 to 14.

**Patentansprüche**

1. Verfahren zur Herstellung eines Gels, wobei das Verfahren die folgenden Schritte umfasst:

    a) Mischen von:

    - mindestens einem Rotalgen-Polysaccharid; und
    - einer Lösung, die ein Metallhydroxid umfasst, wobei die Konzentration von Hydroxid in der Lösung mindestens 1,21 mol/l beträgt und wobei die Konzentration von Metall in der Lösung mindestens 2,79 mol/l beträgt;

    wobei man ein Anfangsgemisch erhält;
    b) Erhitzen des in Schritt a) erhaltenen Anfangsgemischs auf eine Schmelztemperatur des Rotalgen-Polysaccharids, wobei man ein Schmelzgemisch erhält;
    c) Gelierenlassen des in Schritt b) erhaltenen Schmelzgemischs.

2. Verfahren gemäß Anspruch 1, wobei das Rotalgen-Polysaccharid ein Galactan ist.

3. Verfahren gemäß einem der Ansprüche 1 oder 2, wobei das Rotalgen-Polysaccharid aus Agar, Agarose und Carrageen ausgewählt ist.

**4.** Verfahren gemäß einem der Ansprüche 1 bis 3, wobei das Rotalgen-Polysaccharid aus Agar und Agarose ausgewählt ist.

**5.** Verfahren gemäß einem der Ansprüche 1 bis 4, wobei es sich bei dem Rotalgen-Polysaccharid um Agarose handelt.

**6.** Verfahren gemäß Anspruch 5, wobei die Menge des Rotalgen-Polysaccharids im Anfangsgemisch zwischen 1,5 und 2,5% liegt, bezogen auf das Gesamtgewicht des Anfangsgemischs.

**7.** Verfahren gemäß einem der Ansprüche 1 bis 6, wobei die Konzentration des Metallhydroxids in der Lösung mindestens 3 mol/l beträgt.

**8.** Verfahren gemäß einem der Ansprüche 1 bis 7, wobei die Konzentration des Metallhydroxids in der Lösung zwischen 5 mol/l und 9 mol/l liegt.

**9.** Verfahren gemäß einem der Ansprüche 1 bis 8, wobei es sich bei dem in der Lösung enthaltenen Metallhydroxid um Kaliumhydroxid handelt.

**10.** Gel, erhältlich nach dem Verfahren gemäß einem der Ansprüche 1 bis 9.

**11.** Verwendung eines Gels gemäß Anspruch 10 als Elektrolyt.

**12.** Elektrochemische Metall-Luft-Zelle, umfassend:

- eine Anode;
- eine Kathode; und
- einen Elektrolyten, wobei der Elektrolyt ein Gel gemäß Anspruch 10 ist.

**13.** Elektrochemische Metall-Luft-Zelle gemäß Anspruch 12, bei der es sich um eine elektrochemische Zink-Luft-Zelle handelt.

**14.** Elektrochemische Metall-Luft-Zelle gemäß einem der Ansprüche 12 bis 13, wobei die Anode aus Zinkmetall besteht und die Kathode $MnO_2$ umfasst.

**15.** Fahrzeug, elektronisches Bauteil oder Stromnetz, umfassend eine elektrochemische Zelle gemäß einem der Ansprüche 12 bis 14.

**Revendications**

**1.** Procédé de préparation d'un gel, comprenant les étapes suivantes :

a) Mélanger :

- au moins un polysaccharide d'algue rouge ; et
- une solution comprenant un hydroxyde métallique, dans laquelle la concentration d'hydroxyde dans ladite solution est d'au moins 1,21 mol/L, et dans laquelle la concentration de métal dans ladite solution est d'au moins 2,79 mol/L ;

pour obtenir un mélange initial ;
b) Chauffer le mélange initial obtenu à l'étape a) jusqu'à une température de fusion du polysaccharide d'algue rouge, afin d'obtenir un mélange fondu ;
c) Gélifier le mélange fondu obtenu à l'étape b).

**2.** Procédé selon la revendication 1, dans lequel le polysaccharide d'algue rouge est un galactane.

**3.** Procédé selon l'une quelconque des revendications 1 ou 2, dans lequel le polysaccharide d'algue rouge est sélectionné parmi l'agar, l'agarose et le carraghénane.

**4.** Procédé selon l'une quelconque des revendications 1 à 3, dans lequel le polysaccharide d'algue rouge est sélectionné parmi l'agar et l'agarose.

**5.** Procédé selon l'une quelconque des revendications 1 à 4, dans lequel le polysaccharide d'algue rouge est l'agarose.

**6.** Procédé selon la revendication 5, dans lequel la quantité de polysaccharide d'algue rouge dans le mélange initial est comprise entre 1,5 et 2,5% par rapport au poids total du mélange initial.

**7.** Procédé selon l'une quelconque des revendications 1 à 6, dans lequel la concentration de métal dans ladite solution est d'au moins 3 mol/L.

**8.** Procédé selon l'une quelconque des revendications 1 à 7, dans lequel la concentration en hydroxyde métallique dans ladite solution est comprise entre 5 mol/L et 9 mol/L.

**9.** Procédé selon l'une quelconque des revendications 1 à 8, dans lequel l'hydroxyde métallique compris dans ladite solution est l'hydroxyde de potassium.

**10.** Gel susceptible d'être obtenu par le procédé de l'une quelconque des revendications 1 à 9.

**11.** Utilisation d'un gel tel que défini dans la revendication 10 comme électrolyte.

**12.** Cellule électrochimique métal-air comprenant :

- Une anode ;
- Une cathode ; et
- Un électrolyte, dans lequel l'électrolyte est un gel tel que défini dans la revendication 10.

13. Cellule électrochimique métal-air selon la revendication 12, qui est une cellule électrochimique zinc-air.

14. Cellule électrochimique métal-air selon l'une quelconque des revendications 12 à 13, dans laquelle l'anode est du zinc métal et la cathode comprend du $MnO_2$.

15. Véhicule, dispositif électronique ou réseau électrique comprenant une cellule électrochimique telle que définie dans l'une quelconque des revendications 12 à 14.

a)

b)

c)

d)

e)

Figure 1

Figure 2

Figure 3

Figure 4

Figure 5

Figure 6

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1023179 A

- CN 111224153 A

**Non-patent literature cited in the description**

- **VIEBKE et al.** *Macromolecules,* 1994, vol. 27, 4160-4166
- **QUEMENER et al.** *Journal of Applied Phycology,* 1998, vol. 10, 75-81
- Production and utilization of products from commercial seaweeds. *Food And Agriculture Organization Of The United Nations Fisheries technical paper 288,* 1987
- **DODGSON et al.** *Biochem. J,* 1962, vol. 84 (1), 106-110
- **NORMAND et al.** *Biomacromolecules,* 2000, vol. 1 (4), 730-738
- **FREILE-PELEGRIN et al.** *Ciencias Marinas,* 2002, vol. 28 (3), 289-296
- Production and utilization of products from commercial seaweeds. Food And Agriculture Organization Of The United Nations Fisheries technical paper 288. 1987
- **HU et al.** *Chinese Journal of Oceanology and Limnology,* 2007, vol. 25 (4), 367-372

- Production and utilization of products from commercial seaweeds. the Food And Agriculture Organization Of The United Nations Fisheries technical paper 288. 1987
- **MATSUHIRO et al.** *Journal of Applied Phy cology,* 2014, vol. 26 (5), 2011-2019
- **WANG et al.** *Int J Biol Macromol,* 2016, vol. 93, 600-608
- **GU et al.** *Chem Cent J.,* 2017, vol. 11, 104
- **YUAN et al.** *Carbohydrate Research,* 2005, vol. 340 (4), 685-92
- **WATASE et al.** *Polymer Journal,* 1986, vol. 18 (12), 1017-1025
- **WANG et al.** *Appl. Sci.,* 2019, vol. 9 (14), 2787
- **STOCK et al.** *ACS Energy Lett.,* 2019, vol. 4, 1287-1300
- **MAISER.** Review on Electrochemical Storage Materials and Technology. *AIP Conf. Proc.,* 2014, vol. 1597, 204-218
- **DI PALMA et al.** *Carbohydrate Polymers,* 2017, vol. 157, 122-127